# EUROPÄISCHE PATENTANMELDUNG

(11) **EP 0 718 178 A1**
(43) Veröffentlichungstag der Anmeldung: **26.06.1996**
(21) Anmeldenummer: 95120094.8
(22) Anmeldetag: 19.12.1995
(51) Int. Cl.: B62D 61/12, B62D 49/06

(54) **Dreiradschlepperfahrzeug**

(30) Priorität: 23.12.1994 DE 4446225
(71) Anmelder: Horsch Maschinen GmbH, D-92421 Schwandorf (DE)
(72) Erfinder: Horsch, Michael, D-92421 Schwandorf (DE)
(74) Vertreter: Wasmeier, Alfons, Dipl.-Ing.

(57) **Zusammenfassung**

Bei einem Dreiradschlepperfahrzeug mit Breitreifen, einem Vorderrad auf der Vorderachse und zwei Hinterrädern auf der Hinterachse ist den beiden Hinterrädern jeweils ein Zusatzrad mit Breitreifen zuschaltbar zugeordnet, so daß die auf die Hinterachse wirkende Belastung bei Zuschaltung der Zusatzräder von zwei Rädern auf vier Räder verteilt wird.

## Beschreibung

Die Erfindung bezieht sich auf ein Dreiradschlepperfahrzeug nach dem Oberbegriff des Anspruches 1.

Derartige Dreiradschlepperfahrzeuge sind bekannt. Zur Erzielung eines geringen Bodendruckes sind bei diesen bekannten Fahrzeugen die Breitreifen so zueinander angeordnet, daß die überfahrene Fläche möglichst gleichmäßig belastet wird, sodaß ein möglichst geringer Bodendruck erreicht wird.

Bei nassen Böden oder anderweitig extrem schwierigen Bodenverhältnissen ist jedoch, wie die Praxis gezeigt hat, der von diesen drei Rädern des Fahrzeuges ausgeübte Bodendruck immer noch sehr hoch, so daß erhebliche Probleme durch Bodenverdichtung auftreten können, wenn extreme Verhältnisse vorliegen.

Aufgabe der Erfindung ist es deshalb, eine Vorrichtung zu schaffen, mit der es möglich ist, den von Dreiradfahrzeugen der gattungsgemäßen Art ausgeübten Bodendruck einstellbar zu machen und entscheidend zu verringern, gleichzeitig aber das Fahrzeug straßentauglich zu belassen.

Dies wird gemäß der Erfindung mit den Merkmalen des Kennzeichens des Anspruches 1 erreicht. Weitere Ausgestaltungen der Erfindung sind Gegenstand der Unteransprüche.

Grundsätzlich wird mit vorliegender Erfindung vorgeschlagen, ein zusätzliches Paar von Breitreifen auf der Hinterachse des Fahrzeuges vorzusehen, um den Bodendruck zu reduzieren und die Last auf vier Räder auf der Hinterachse zu verteilen. Die Radaufhängung dieser beiden Zusatzräder ist so ausgelegt, daß sie auf einfache Weise an- und abgebaut werden kann. Insbesondere für die Straßenfahrt müssen die beiden Zusatzräder entfernt werden, um die vorbeschriebene Fahrzeugbreite einhalten zu können. Hierzu werden die Zusatzräder mit den Radaufhängungen als Steckverbindungen mit der Hinterradachse ausgeführt und mit Hilfe eines Kranes oder einer anderen Hubvorrichtung angebaut und abgebaut. Die Radaufhängung ist dabei drehbar auf der Hinterradachse gelagert und auslegerartig ausgeführt, so daß die Gewichtsverteilung auf die beiden Hinterräder und die beiden Zusatzräder beliebig angepaßt werden kann. Hierzu sind am Aufbau bzw. am Rahmen Hubzylinder angeordnet, die auf die Radaufhängungen in hebendem und senkendem Sinn einwirken, so daß durch Betätigung der Hubzylinder mehr oder weniger Gewicht auf die Zusatzräder (bei gleichzeitiger Entlastung der beiden Hinterräder) verteilt werden kann, und damit ein gleichmäßiger Bodendruck ausgeübt wird.

Nachstehend wird die Erfindung in Verbindung mit der Zeichnung anhand eines Ausführungsbeispieles erläutert. Es zeigen:
- Fig. 1: eine schematische Darstellung des erfindungsgemäßen Fahrzeuges von hinten, und
- Fig. 2: eine schematische Darstellung des erfindungsgemäßen Fahrzeuges von oben.

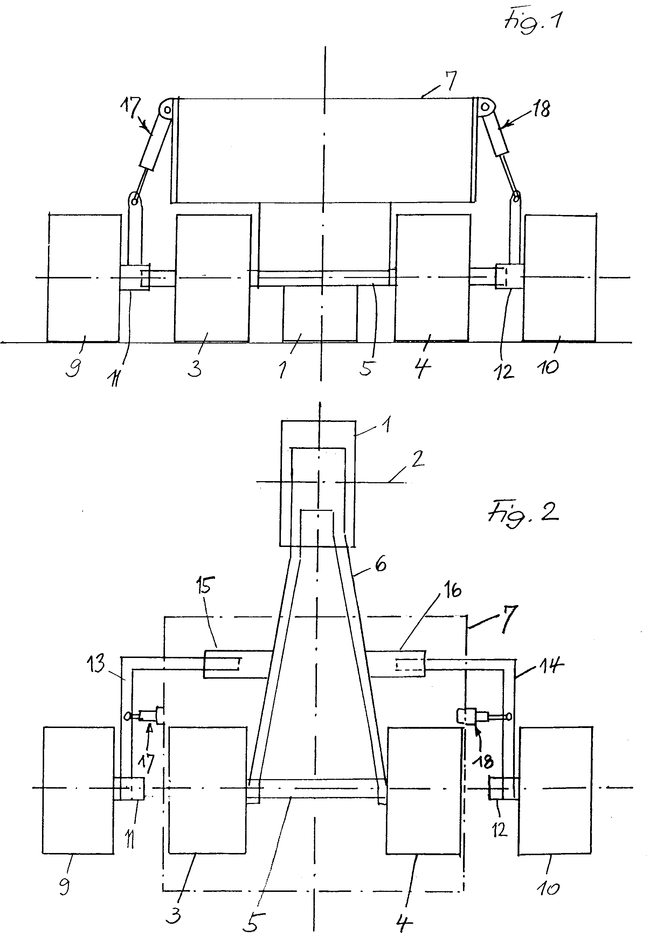

Das in der Zeichnung schematisch dargestellte Dreiradfahrzeug weist ein Vorderrad 1 auf einer Vorderradachse 2 sowie zwei Hinterräder 3, 4 auf einer Hinterradachse 5 auf. Vorderradachse und Hinterradachse sind über einen Fahrzeugrahmen 6 miteinander verbunden. Das Vorderrad 1 ist dabei beispielsweise über ein Drehgelenklager bzw. einen Drehkranz und eine einseitige Schwinge, die mit der Achse 2 gelenkig gelagert ist, verbunden. Diese Art der Lagerung ist an sich bekannt und deshalb hier nicht näher erläutert.

Über der Hinterradachse 5 ist ein Aufbau 7 mittels Zwischenrahmen 8 auf dem Rahmen 6 abgestützt. Die Zusatzräder 9 und 10 sind über ihre Achsen 11 und 12 mit den Radaufhängungen 13 und 14 steckbar verbunden. Die Radaufhängungen 13, 14 sind in Aufnahmen 15, 16 drehbar gelagert. Die Radaufhängungen 13, 14, die z.B. auslegerartig ausgebildet sind, sind mit Hubvorrichtungen 17, 18 verbunden, welche beispielsweise am Aufbau 7 festgelegt sind, so daß die Radaufhängungen 13, 14 mit den Steckachsen 11, 12 beaufschlagt und damit die Zusatzräder 9, 10 im Vergleich zu den Hinterrädern 3, 4 zusätzlich be- oder entlastet werden können, je nach der gewünschten Gewichtsverteilung.

## Patentansprüche

1. Dreiradschlepperfahrzeug mit Breitreifen, einem Vorderrad auf der Vorderachse und zwei Hinterrädern auf der Hinterachse, wobei das Vorderrad und die beiden Hinterräder auf getrennten, nebeneinander liegenden Spuren laufen, um einen geringen Bodendruck zu erzielen, mit einem Vorder- und Hinterachse miteinander verbindenden Fahrzeugrahmen und einem Lasten aufnehmenden Aufbau über der Hinterachse, dadurch gekennzeichnet, daß den beiden Hinterrädern (3, 4) der Hinterachse (5) jeweils ein weiteres, äußeres Zusatzrad (9, 10) mit Breitreifen zuschaltbar zugeordnet ist, derart, daß die auf die Hinterachse wirkende Belastung von zwei Rädern (3, 4) auf vier Räder (3, 4, 9, 10) verteilt wird.

2. Fahrzeug nach Anspruch 1, dadurch gekennzeichnet, daß die Achsen (11, 12) der Zusatzräder (9, 10) mit den Radaufhängungen (13, 14) verbunden sind.

3. Fahrzeug nach Anspruch 2, dadurch gekennzeichnet, daß die Zusatzräder (9, 10) mit den Radaufhängungen (13, 14) steckbar verbunden sind.

4. Fahrzeug nach Anspruch 1, dadurch gekennzeichnet, daß die äußeren Zusatzräder (9, 10) auf der Hinterachse (5) zuschaltbar angeordnet sind.

5. Fahrzeug nach einem der Ansprüche 1 - 4, dadurch gekennzeichnet, daß die Zusatzräder (9, 10) über Hubvorrichtungen (17, 18) anhebbar ausgebildet sind.

6. Fahrzeug nach einem der Ansprüche 1 - 5, dadurch gekennzeichnet, daß die Zusatzräder (9, 10) mittels Radaufhängungen (13, 14) mit dem Rahmen (6) bzw. Aufbau (7) des Fahrzeuges befestigt sind.

7. Fahrzeug nach Anspruch 6, dadurch gekennzeichnet, daß die Radaufhängung (13, 14) zwischen Radachse (11, 12) der Zusatzräder (9, 10) und Aufbau (7) bzw. Rahmen (6) angeordnet ist und Hubzylinder zum Heben und Senken der Zusatzräder aufweist.

8. Fahrzeug nach einem der Ansprüche 1 - 7, dadurch gekennzeichnet, daß die Zusatzräder (9, 10) hochschwenkbar ausgebildet sind.

9. Fahrzeug nach einem der Ansprüche 1 - 8, dadurch gekennzeichnet, daß die Hubvorrichtungen (17, 18) entsprechend der gewünschten Gewichtsverteilung auf die Gesamträder steuerbar sind.
